# EUROPEAN PATENT APPLICATION

(11) **EP 1 111 823 A2**
(43) Date of publication of application: **27.06.2001**
(21) Application number: 00250346.4
(22) Date of filing: 19.10.2000
(51) Int. Cl.: H04H 1/00

(54) **Method and system for reliable transmission of information to car users using digital broadcast transmitters and receivers**

(30) Priority: 21.10.1999 JP 29962499
(71) Applicant: NEC CORPORATION, Tokyo (JP)
(72) Inventor: Shimazu, Hideo, Minato-ku, Tokyo (JP)
(74) Representative: Patentanwälte Wenzel & Kalkoff

(57) **Abstract**

A digital broadcast transmitter and receiver for car users, in which a user can obtain information stably that the user desires to obtain in a situation of changing time, place, and contents whilst driving a car, by using a broadcast network, not using a high price communication network, is provided. At the digital broadcast transmitter and receiver, a repetition type program broadcasting equipment broadcasts programs repeatedly, and an integrity inspector receives the broadcast programs from the repetition type program broadcasting equipment one by one, and when the integrity inspector receives one of the broadcast programs completely, the integrity inspector outputs the received program to a program adder. The program adder compares information of the received program with stored information in a desired information storage in which type information the user desires to obtain is stored, in time storage storing the present time, and in place storage storing the present position. When the comparison result matches, the received program is stored in the program storage. A program selector selects a program that has the least playback times from the program storage. A program playback unit plays back the selected broadcast program. A program deleting unit periodically takes out the broadcast programs stored in the broadcast program storage one by one, and compares the information in the taken out broadcast program with stored information in the desired information storage, in the time storage, in the place storage. When the comparison result does not match, the taken out broadcast program is discarded.

## Description

### BACKGROUND OF THE INVENTION

The present invention relates to a digital broadcast transmitter and receiver and a method thereof, in which a user in a car can stably receive broadcast programs that the user desires to receive.

### Description of the Related Art

Recently, car navigation systems have been widely used. In addition to normal functions of car navigation systems, a car navigation system having a communication function has been developed. By using this developed function, a user can receive information of such as a restaurant and an amusement park by the information being inputted to the car navigation system through a cellular phone or a car phone. This kind of information is also available as software by way of a CD-ROM or a DVD. However, this information changes as time passes. Therefore, car navigation system having a communication function has an advantage because the system can respond to the latest information.

Automobile manufacturing companies and car navigation system manufacturing companies are now supplying information for car users by their systems. These systems are called Monet by Toyota, Compasslink by Nissan, Internavi by Honda, ITGS (intelligent traffic guidance system) by Mercedes-Benz, and Mobilelink by car navigation system manufacturing companies. These systems perform two-way communication between the information supplier and the user in the car.

Another information system named VICS (vehicle information & communication system) is available in Japan. By using this VICS system, the user can get information on e.g. traffic jams, traffic control, vacancy information of a parking lot or the like through the car navigation system. The VICS system utilizes two kinds of beacons, that is, light beacons for roads and radio beacons for expressways, and wide band FM radio waves. This system performs one-way communication from the supplier to the users. The VICS is described in a book named "The future map of ITS (intelligent transport system) business" published by Sankaido Publishing Co. in 1999, written by Dentsu Institute for Human Studies, pp.44-46.

Furthermore, a system called PUSH is available via Internet. For example, in using this PUSH technology, a company named Pointcast supplies information. When a user registers the types of information desired by the user beforehand, with this technology, a PC (personal computer) of the user accesses to a WWW server via Internet every suitable timing such as every one hour, or every one day, the PC automatically gains the latest information from the WWW server. Therefore, the user can automatically watch the information that the user desires to obtain.

Japanese Patent Application Laid-Open No. HEI 7-336256 discloses a broadcast selecting apparatus for selecting traffic information for a user in a car. In this apparatus, the user can select a traffic information program from the latest broadcast programs of broadcasting stations that the user can receive in the relevant region.

However, this apparatus shows various problems. One problem is that this apparatus needs two functions, that is, a pager function that transmits and receives the broadcasting dates and time of traffic information programs of broadcasting stations through a communication network beforehand, and a broadcast receiving function that receives the traffic information programs. A second problem is that it is easily possible to miss catching the traffic information because the programs are not broadcast repeatedly. For example, when the car runs in a tunnel, the program cannot be received and the user cannot obtain the respective traffic information. A third problem exists in that the user can only obtain traffic information.

In order to realize supplying ideal information to a user, only such information which is suitable for each user in his/her situation should be supplied. Since the main user is a person who is driving a car. the interface must be simple, and if possible, it is convenient for the user that the information is outputted automatically without any operation while driving the car.

This is an interface performing one-way communication such as radio broadcast. For example, the following information is very convenient for the user: "A fast-food restaurant XXX is nearby." "After one hour, a firework display will start at ABC city." "There is a gas station when you leave at the second exit." "At about noon, the car will pass through YYY street, where you will find a two-star French restaurant.". As mentioned above, just like radio broadcast, if only the information needed for the user in his/her situation is selected and supplied, the user need not perform any operation at that time.

At present, supplying information being suitable for each person in his/her situation does not exist in car navigation systems. Even if information is supplied, two-way communication function is required, and the user must bear the cost.

Therefore, it is necessary that the user registers all types of information he desires to use and the supplier supplies the user only the information he needs. If only the information that the user desires to obtain is supplied to him, he need not request the information every time on demand, and the interface between the user and the supplier becomes simple.

The technology of Pointcast intends to satisfy the conditions mentioned above, and Pointcast resembles a TV broadcast. However, TV broadcast is for an indefinite number of users, and Pointcast supplies only the kind of information that the user designates. In other words, Poinicast can be said to be a customized TV broadcast. However, Pointcast uses communication network, and when the user PC accesses to a WWW server by using a mobile phone, he must bear the charges for the mobile phone.

### SUMMARY OF THE INVENTION

It is therefore an object of the present invention to provide a digital broadcast transmitter and receiver and a method thereof, in which a user can obtain information stably that he desires to obtain in a situation of changing time, place, and contents whilst driving a car, by using a broadcast network that can realize a PUSH type information supplying technology that has only been realized in a communication network.

According to a first aspect of the present invention, for achieving the object mentioned above, there is provided a digital broadcast transmitter and receiver for car users. The digital broadcast transmitter and receiver provides repetition type program broadcasting equipment which repeatedly broadcasts plural broadcast programs having respective individual program Ids (identifiers) one by one, broadcast program storage which stores the plural broadcast programs broadcast from the repetition type program broadcasting equipment, a program selector which selects a broadcast program having the least playback times from the plural broadcast programs stored in the broadcast program storage, and a program playback unit which plays back the broadcast program selected at the program selector.

According to a second aspect of the present invention, the digital broadcast transmitter and receiver for car users further provides an integrity inspector which continues to receive a first broadcast program broadcast from the repetition type program broadcasting equipment, and when a starting position tag of the first broadcast program is detected, memorizes length information, following the starting position tag, being the amount of information of main contents of the first broadcast program, and the main contents of the first broadcast program, and inspects whether or not an ending position tag of the first broadcast program exists after the main contents, and in case the ending position tag exists, judges that the first broadcast program has been received completely, and outputs the first broadcast program as a received broadcast program, and in case a starting position tag of a second broadcast program is detected before the ending position tag of the first broadcast program is detected, judges that the first broadcast program has not been received completely, and discards a part of the first broadcast program from the starting position tag of the first broadcast program to right before the starting position tag of the second broadcast program, and in case the ending position tag of the first broadcast program does not exist after the main contents of the first broadcast program, judges that the first broadcast program has not been received completely, and discards a part of the first broadcast program from the starting position tag of the first broadcast program to right before the position where the ending position tag of the first broadcast program is to exist, and continues to receive the broadcast programs from the repetition type program broadcasting equipment after the reception of the first and second broadcast programs one by one.

According to a third aspect of the present invention, the digital broadcast transmitter and receiver for car users further provides desired information storage in which type information that a user desires to obtain is stored, time storage in which present time information read out from a clock is automatically stored, place storage in which present place information read out from a GPS (global positioning system) is stored in the form of latitude and longitude, and a program adder which the broadcast program outputted from the integrity inspector is inputted to, and compares the program ID of the inputted broadcast program with the program IDs of the broadcast programs stored in the broadcast program storage, and in case the result of comparison is the same, the inputted broadcast program is discarded, and in case the comparison result is not the same. time information, place information, and type information of the inputted broadcast program are compared with the information in the desired information storage, the time storage, and the place storage, and when the compared result matches, the inputted broadcast program is stored in a storage unit having a flag "empty" in the broadcast program storage, and makes the flag "empty" "full", and when the compared result does not match, discards the inputted broadcast program.

According to a fourth aspect of the present invention, the digital broadcast transmitter and receiver for car users further provides a program deleting unit which takes out the broadcast programs stored in the broadcast program storage one by one, and the time information, the place information, and the type information of the taken out broadcast program are compared with the information in the desired information storage, the time storage, and the place storage, and in case the comparison result matches, the taken out broadcast program is left in the broadcast program storage, and in case the comparison result does not match, the taken out broadcast program is discarded from the broadcast program storage.

According to a fifth aspect of the present invention, each of the plural broadcast programs provides a starting position tag, length information, main contents, and an ending position tag, and the main contents provides time information, place information, type information, the program ID, and program contents, and the broadcast program storage provides storage areas of a program storage unit having a flag "full" or "empty", the number of playback times, and storage areas for the main contents being time information, place information, type information, program ID, and program contents.

According to a sixth aspect of the present invention, a digital broadcast transmitter and receiver for car users provides repetition type program broadcasting equipment which repeatedly broadcasts plural broadcast programs having respective individual program IDs one by one, an integrity inspector which continues to receive the plural broadcast programs broadcast from the repetition type program broadcasting equipment one by one, and when a starting position tag of a first broadcast program is detected, memorizes length information, following the starting position tag, being the amount of information of main contents of the first broadcast program, and the main contents of the first broadcast program, and inspects whether or not an ending position tag of the first broadcast program exists after the main contents, and in case the ending position tag exists, judges that the first broadcast program has not been received completely, and outputs the first broadcast program as a received broadcast program, and in case a starting position tag of a second broadcast program is detected before the ending position tag of the first broadcast program is detected, judges that the first broadcast program has not been received completely, and discards a part of the first broadcast program from the starting position tag of the first broadcast program to right before the starting position tag of the second broadcast program, and in case that the ending position tag of the first broadcast program does not exist after the main contents of the first broadcast program, judges that the first broadcast program has not been received completely, and discards a part of the first broadcast program being from the starting position tag of the first broadcast program to right before the position where the ending position tag of the first broadcast program is to exist, and continues to receive the plural broadcast programs from the repetition type program broadcasting equipment after the reception of the first and second broadcast programs one by one, broadcast program storage which stores plural broadcast programs passed through the integrity inspector and a program adder, a program selector which selects a broadcast program having the least playback times from the plural broadcast programs stored in the broadcast program storage, a program playback unit which plays back the broadcast program selected at the program selector, desired information storage in which type information a user desires to obtain is stored, time storage in which present time information read out from a clock is automatically stored, place storage in which present place information read out from a GPS is stored in the form of latitude and longitude, the program adder which the broadcast program outputted from the integrity inspector is inputted to, and compares the program ID of the inputted broadcast program with the program IDs of the broadcast programs stored in the broadcast program storage, and in case the result of comparison is the same, the inputted broadcast program is discarded, and in case the comparison result is not the same, time information, place information, and type information of the inputted broadcast program are compared with the information in the desired information storage, the time storage, and the place storage, and when the comparison result matches, the inputted broadcast program is stored in a storage unit having a flag "empty" in the broadcast program storage, and makes the flag "empty" "full", and when the comparison result does not match, discards the inputted broadcast program, and a program deleting unit which takes out the broadcast programs stored in the broadcast program storage one by one, and the time information, the place information, and the type information of the taken out broadcast program are compared with the information in the desired information storage, the time storage, and the place storage, and in case the comparison result matches, the taken out broadcast program is left in the broadcast program storage, and in case the comparison result does not match, the taken out broadcast program is discarded from the broadcast program storage.

According to a seventh aspect of the present invention, there is provided a digital broadcast transmitting and receiving method for car users. The digital broadcast transmitting and receiving method for car users provides the steps of; broadcasting repeatedly plural broadcast programs having respective individual program IDs one by one, storing the plural broadcast programs in broadcast program storage, selecting a broadcast program having the least playback times from the plural broadcast programs stored in the broadcast program storage, and playing back the selected broadcast program.

According to an eighth aspect of the present invention, the digital broadcast transmitting and receiving method for car users further provides the steps of; continuing to receive a first broadcast program, when a starting position tag of the first broadcast program is detected, memorizing length information being the amount of information of main contents of the first broadcast program following the starting position tag, and the main contents of the first broadcast program, inspecting whether or not an ending position tag of the first broadcast program exists after the main contents, in case the ending position tag exists, outputting the first broadcast program as a received broadcast program by judging that the first broadcast program has been received completely, in case a starting position tag of a second broadcast program is detected before the ending position tag of the first broadcast program is detected, discarding a part of the first broadcast program from the starting position tag of the first broadcast program to right before the starting position tag of the second broadcast program by judging that the first broadcast program has not been received completely, in case the ending position tag of the first broadcast program does not exist after the main contents of the first broadcast program, discarding a part of the first broadcast program from the starting position tag of the first broadcast program to right before the position where the ending position tag of the first broadcast program is to exist by judging that the first broadcast program has not been received completely, and continuing to receive the plural broadcast programs after the repetition of the first and second broadcast programs.

According to a ninth aspect of the present invention, the digital broadcast transmitting and receiving method for car users further provides the steps of; storing type information which a user desires to obtain, storing automatically present time information read out from a clock, storing present place information read out from a GPS in a form of latitude and longitude, inputting the completely received broadcast program, comparing the program ID of the inputted broadcast program with the program IDs of the broadcast programs stored in the broadcast program storage, in case the comparison result is the same, discarding the inputted broadcast program, in case the comparison result is not the same, comparing time information, place information, and type information of the inputted broadcast program with the information of the type information which the user desired to obtain, the present time information, and the present place information, and when the comparison result matches, storing the inputted broadcast program in a storage unit having a flag "empty" in the broadcast program storage, and making the flag "empty" "full", and when the comparison result does not match, discarding the inputted broadcast program.

According to a tenth aspect of the present invention, the digital broadcast transmitting and receiving method for car users further provides the steps of; taking out the broadcast programs stored in the broadcast program storage one by one, comparing the time information, the place information, and the type information of the taken out broadcast program with the information of the stored type information which the user desired to obtain, the stored time information, and the stored place information, in case the comparison result matches, making the taken out broadcast program stay in the broadcast program storage, and in case that the compared result does not match, making the taken out broadcast program discard from the broadcast program storage.

According to an eleventh aspect of the present invention, a digital broadcast transmitting and receiving method for car users, provides the steps of; broadcasting plural broadcast programs having respective individual program IDs one by one, continuing to receive the plural broadcast programs one by one, and when a starting position tag of a first broadcast program is detected, memorizing length information, following the starting position tag, being the amount of information of main contents of the first broadcast program, and the main contents of the first broadcast program, and inspecting whether an ending position tag of the first broadcast program exists or not after the main contents, and in case the ending position tag exists, judging that the first broadcast program has been received completely, and outputting the first broadcast program as a received broadcast program, and in case a starting position tag of a second broadcast program is detected before the ending position tag of the first broadcast program is detected, judging that the first broadcast program has not been received completely, and discarding a part of the first broadcast program from the starting position tag of the first broadcast program to right before the starting position tag of the second broadcast program, and in case the ending position tag of the first broadcast program does not exist after the main contents of the first broadcast program, judging that the first broadcast program has not been received completely, and discarding a part of the first broadcast program from the starting position tag of the first broadcast program to right before the position where the ending position tag of the first broadcast program is to exist, and continuing to receive the plural broadcast programs after the reception of the first and second broadcast programs one by one, storing the completely received plural broadcast programs in the broadcast program storage, selecting a broadcast program having the least playback times from the plural broadcast programs stored in the broadcast program storage, playing back the selected broadcast program, storing type information that a user desires to obtain, storing present time information read out from a clock automatically, storing present place information read out from a GPS in the form of latitude and longitude, inputting the completely received broadcast program, comparing the program ID of the inputted broadcast program with the program IDs of the broadcast programs stored in the broadcast program storage, and in case the comparison result is the same, the inputted broadcast program is discarded, and in case the compared result is not the same, time information, place information, and type information of the inputted broadcast program are compared with the information of the stored type information that the user desires to obtain, the stored present time information, and the stored present place information, and when the result of comparison matches, storing the inputted broadcast program in a storage unit having a flag "empty" in the broadcast program storage, and making the flag "empty" "full", and when the comparison result does not match, discarding the inputted broadcast program, taking out the broadcast programs stored in the broadcast program storage one by one, comparing the time information, the place information, and the type information of the taken out broadcast program with the information of the stored type information that the user desires to obtain, the stored present time information, and the stored present place information, and in case the comparison result matches, the taken out broadcast program is left in the broadcast program storage, and in case the comparison result does not match, the taken out broadcast program is discarded from the broadcast program storage.

### BRIEF DESCRIPTION OF THE DRAWINGS

The objects and features of the present invention will become more apparent from the consideration of the following detailed description taken in conjunction with the accompanying drawings in which:
Fig. 1 is a diagram showing a conceptual structure of a digital broadcast transmitter and receiver for car users of the present invention;
Fig. 2 is a diagram showing the receiving condition of broadcast programs of the digital transmitter and receiver for car users of the present invention;
Fig. 3 is a diagram showing contents of a broadcast program of the digital broadcast transmitter and receiver for car users of the present invention;
Fig. 4 is a block diagram showing a structure of an embodiment of the digital broadcast transmitter and receiver for car users of the present invention;
Fig. 5 is a diagram showing a connection of broadcast programs of the embodiment of the digital broadcast transmitter and receiver for car users of the present invention; and
Fig. 6 is a flowchart showing the operation of an integrity inspector of the embodiment of the digital broadcast transmitter and receiver of the present invention.

### DESCRIPTION OF THE PREFERRED EMBODIMENT

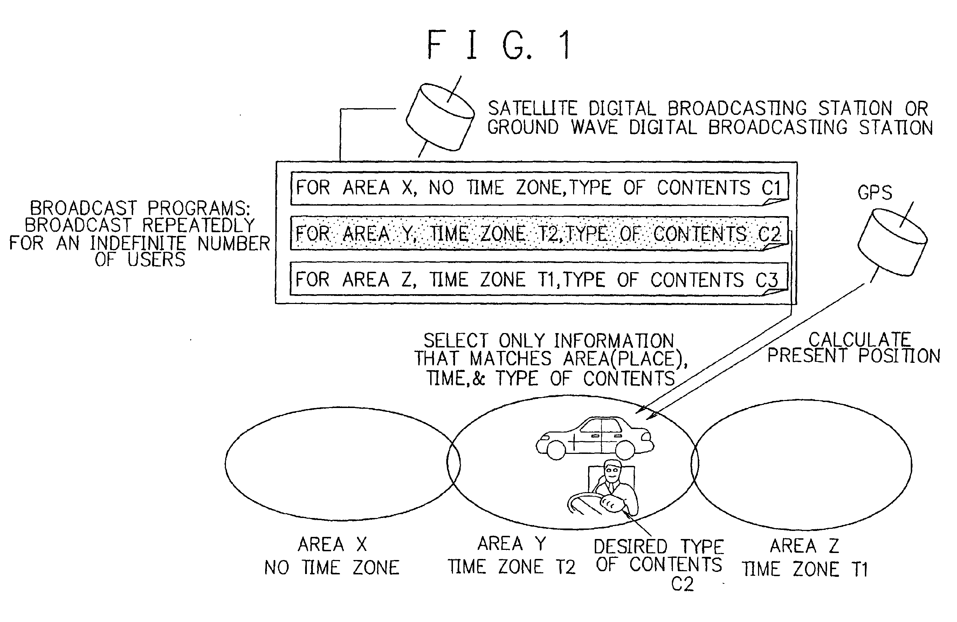

Referring to the drawings, an embodiment of the present invention is explained in detail. As shown in Fig. 1, a group of broadcast programs having contents, broadcasting time, and broadcasting areas are broadcast repeatedly for an indefinite number of users from a satellite digital broadcasting station or a ground wave digital broadcasting station. A user registers a type of information contents that the user desires to obtain into a PC in a car, and the PC stores the desired type of the information contents. In addition to the desired information contents, the present time is obtained from a clock (not shown), and the present position is obtained from a GPS (global positioning system). By using this information, only the information which matches the desired information contents, the present time, and the present position, is selected from the broadcast programs that are broadcast repeatedly for the indefinite number of users, and the selected information is supplied to the user.

Based on the mentioned above operation, for example, the user can obtain the following information. "A fast-food restaurant XXX is nearby." "After one hour, a firework display will start at ABC city." "There is a gas station when you leave at the second exit." "At about noon, the car will pass through YYY street, there is a two-star French restaurant.".

However, since the broadcast network has only a one-way information transmission function from a transmitter to a receiver, there is another problem. That is, when the car enters into a tunnel or a place surrounded by high-rise buildings, difficulties in that the radio wave cannot be carried to the car occur, and there is a case that part of the transmitted data cannot be received normally in the car. In case the user listens to a news program or a music program, the interruption of the listening does not cause any serious problem and the user can do without the broadcast. However, when it becomes impossible to receive the data temporarily while the data is being transmitted by the data broadcasting, the normal data cannot be received, and this becomes a real problem.

In case of a communication network, when difficulty occurs during communication, by using the TCP/IP being the communication protocol of the Internet on the cellular phone, a "resend" instruction can be executed from the receiver to the transmitter because the packet has not been received yet. However, in the case of broadcast network, the communication of information is one-way from the transmitter to the receiver, and there is no way that the receiver may inform the transmitter of the receiving condition. Therefore, in broadcast network that only transmits the information one-way, an alternative method, by which the user can repeatedly receive the broadcast program at the time when the user failed to receive, must be introduced.

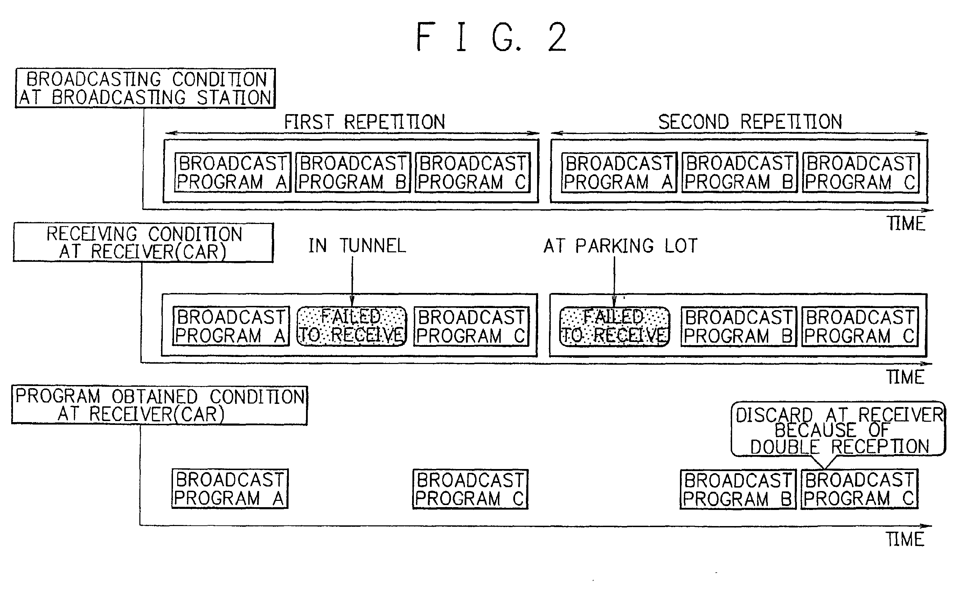

Referring to Fig.2, in case a user has failed to receive a broadcast program, a receiving method of the broadcast program resending from the broadcasting station is explained.

As shown in Fig. 2, a broadcast program is broadcast repeatedly from the broadcasting station. In Fig. 2, the first row shows the broadcasting condition at a broadcasting station. Broadcast programs A, B, and C are broadcast repeatedly. The second row shows the receiving condition with a receiver in a car. As an example, in Fig. 2, the broadcast program B at the first time broadcast could not be received because the car was in a tunnel, and the broadcast A at the second time could not be received either because the car stayed in a parking lot where the user turned off the receiver. Thus, the number of the broadcast programs is mentioned to be three, however, the number of programs are not limited to three, and three or more broadcast programs are broadcast repeatedly.

However, since the broadcasting station repeatedly broadcasts the same broadcast programs A, B, and C, at the case mentioned above, at the second time broadcast, the user can finally receive the broadcast programs A, B, and C completely. In Fig. 2, the third row shows the program obtained condition with the receiver in the car. In this, the broadcast program C is received twice, therefore, the second reception of the broadcast program C is discarded.

There is a possibility that the user fails to receive the broadcast program even at the second reception. Therefore, it is necessary for the broadcasting station to transmit the same broadcast programs repeatedly by sufficient times.

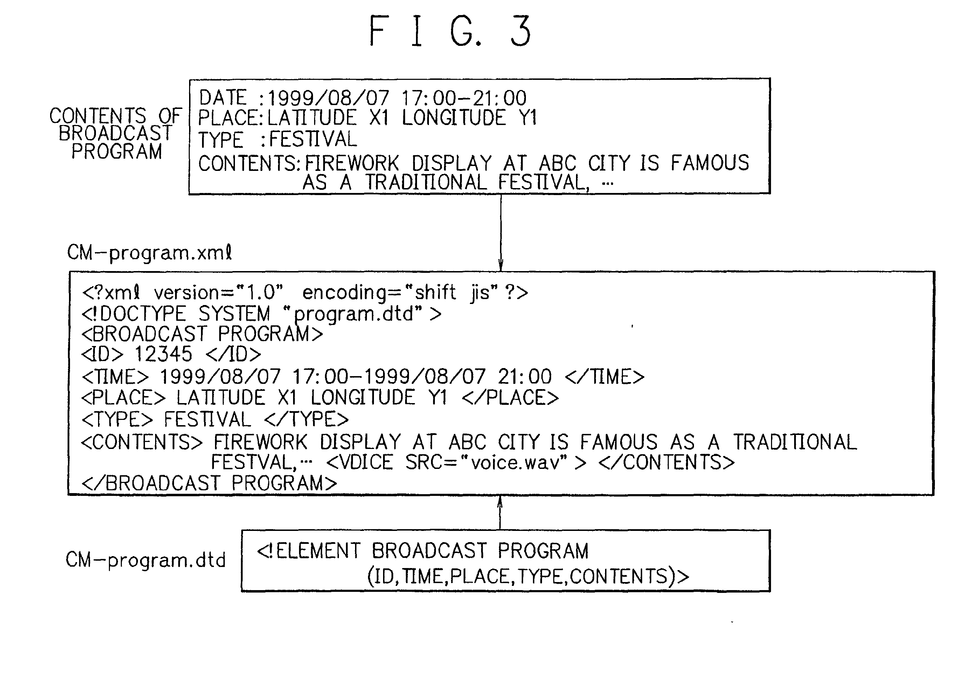

Next, a basic feature of the broadcast program will be explained with regard to Fig. 3. Contents of the broadcast program broadcast by a digital broadcast transmitter can be expressed by an XML (extensible markup language) that has been recently prevailing in the field of the WWW (world wide web). The XML is a language that expresses contents of a document by using attribute tags and a set of a pair of their attribute values. This XML is mentioned in "extensible markup language 1.0" in the web site "http://www.w3.org/TR/TR-xml-971208" of the WWW consortium. The specifications of the XML were proposed by the WWW consortium being an organization to decide the standard of the WWW in December 1997, and the web site is "http://www.w3.org".

Referring to Fig. 3, the contents of the broadcast program are explained. The broadcast program is described in XML. At XLM, the format of a document is defined by a DTD (document type definition) file (Program, dtd). This shows that the format named Program consists of fields of <time>, <place>, <type>, and <contents>. Each of the contents of the broadcast program is stored in a separate XML file one by one. In Fig. 3, information of a firework display is described in the XLM file (Program. xml) by the format specified by Program. dtd.

A <voice SRC = "voice wav"> of the <contents> of the Program. xlm shows a voice file "voice wav" in which the explanation of the firework display is recorded, and the voice file is broadcast together with the Program. xml. In this the SRC signifies a source. In the example mentioned above, the voice file is explained, however, the present invention is not limited to the voice information, image information can be also displayed on the screen of the car navigation system.

For example, when a user registers that the user desires to have information of festivals beforehand, and the user goes to ABC city during the time 17:00 to 21:00 in August 7, 1999, this information of the firework display is informed to the user. Matching the time information in the broadcast program with the present time is easy by a clock (not shown).

As shown in Fig. 3, since the place information in the broadcast program is expressed in latitude and longitude information and the present place information is obtained by the GPS, matching of the place information is easy. As the type information in the broadcast program, a finite number of the kinds of the type information are defined beforehand, and the type information is selected from the defined kinds by the user, therefore the matching of the type information is easy.

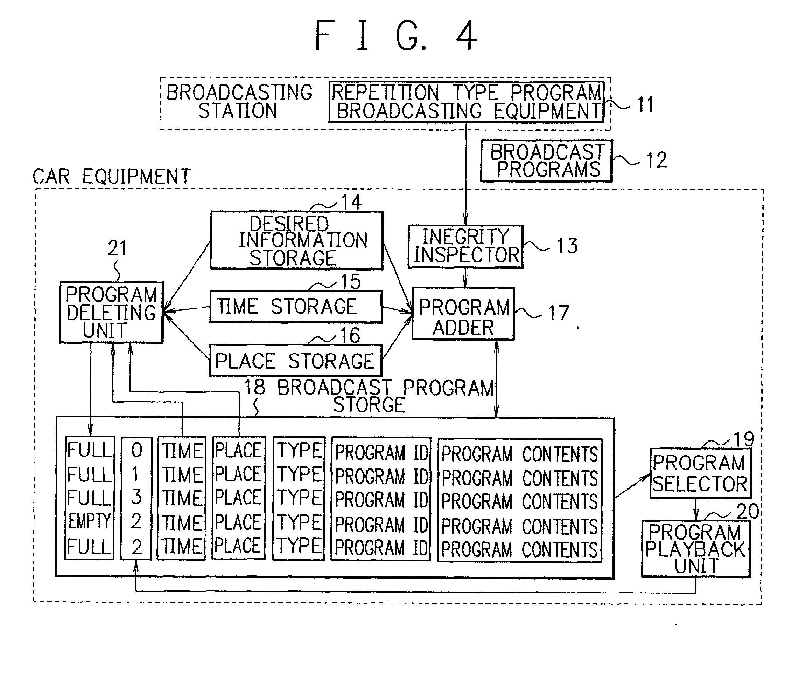

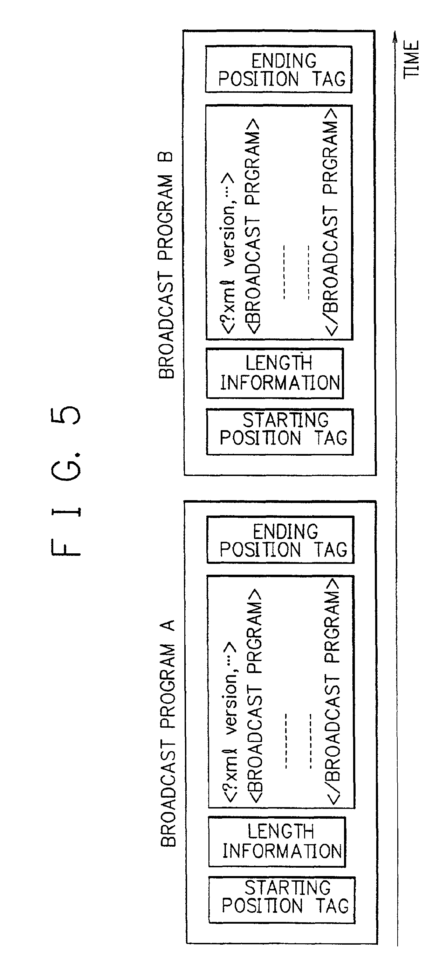

Referring to drawings, the embodiment of the digital broadcast transmitter and receiver for car users of the present invention is explained in detail with regard to Fig. 4 and Fig. 5. As shown in Fig. 4, the embodiment of the present invention consists of repetition type program broadcasting equipment 11, broadcast programs 12, an integrity inspector 13, desired information storage 14, time storage 15, place storage 16, a program adder 17, broadcast program storage 18, a program selector 19, a program playback unit 20, and a program deleting unit 21. The repetition type program broadcasting equipment 11 is provided in a broadcasting station, and the broadcast programs 12 are broadcast from the repetition type program broadcasting equipment 11. The integrity inspector 13, the desired information storage 14, the time storage 15, the place storage 16, the program adder 17, the broadcast program storage 18, the program selector 19, the program playback unit 20, and the program deleting unit 21 are provided in car equipment.

As shown in Fig. 5, a starting position tag and length information are added in front of each broadcast program, and an ending position tag is added at the back of the broadcast program.

Each of the broadcast programs 12 is described by the XML, and has fields of < ID >, < time >, < place >, < type >, and < contents >. In the <time > field, an effective period of time of a CM (commercial message) broadcast program or a traffic information broadcast program is described. In the < ID > field, a single meaning name being a program ID (identifier) allocating to each broadcast program controlled by the broadcasting station is described. In the < place > field, a place related to the broadcast program is described. In the < type > field, a contents classified code of the broadcast programs such as a restaurant, a convenience store, a shopping mall, a home-center store, a hospital, an amusement park, and a gallery, are described.

For example, in case a restaurant wants to advertise a special sale at lunchtime, the period of the lunchtime is described in the < time > field, the address of the restaurant is described in the < place > field, and "restaurant" is described in the < type > field. In the < contents > field, a description expressing a voice file of the contents of the special sale is stored.

In Fig. 3, an example of a firework display is described, however, as mentioned above, any type in the <type> field such as a restaurant, or a hospital can be described. In the < contents > field, a voice data of the contents of the special sale is stored, for example, in a MPEG (moving picture experts group) format.

In case the restaurant wants to inform general restaurant information not offering the special sale at lunchtime, in the < time > field, "anytime" is described. In the < time > field, a month and a day can be described instead of time. When a gallery puts on a special exhibition, in the < time > field, for example, "from August 7 through August 12" is described.

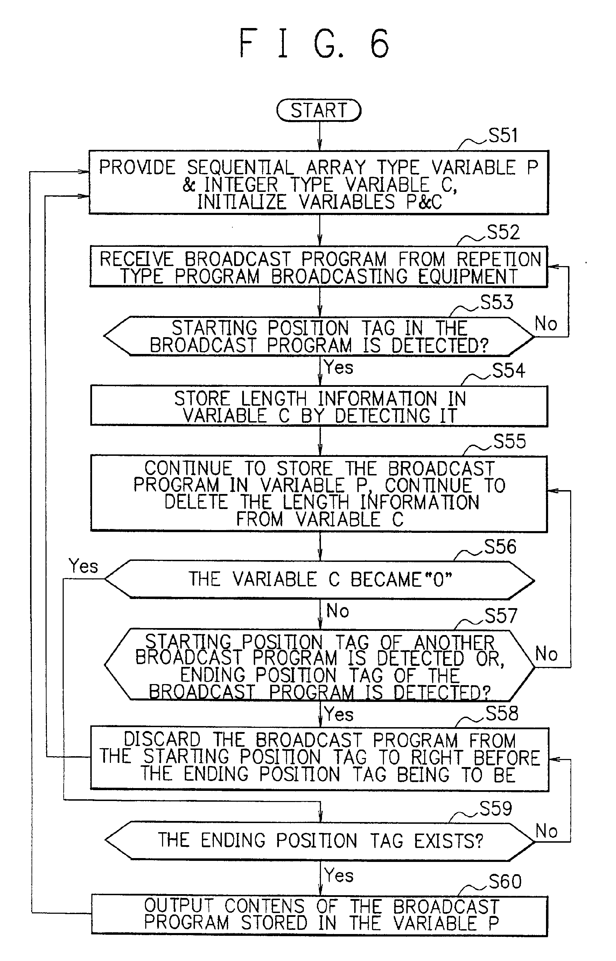

Next, referring to Fig. 6, operation of the embodiment of the digital broadcast transmitter and receiver for car users of the present invention is explained in detail. In case of a ground wave digital broadcast, the repetition type program broadcasting equipment 11 is installed in a broadcasting station, and in case of a satellite digital broadcast, the repetition type program broadcasting equipment 11 is installed in an artificial satellite. The repetition type program broadcasting equipment 11 broadcasts plural broadcast programs 12 repeatedly and periodically. In the case of Fig. 2, the broadcast programs A, B, and C are broadcast.

A type of information desired by a user is stored in the desired information storage 14. This type is the same that each of the broadcast programs 12 has in its < type > field. In the time storage 15, the present time read out from a clock (not shown) is automatically stored. For example, the time is renewed every one minute.

In the place storage 16, the present place information read out from the GPS (shown in Fig. 1) is stored in latitude and longitude. For example, the present place information is also renewed every one minute.

Referring to Fig. 6, the operation of the integrity inspector of the embodiment of the present invention is explained. The integrity inspector 13 provides a sequential array type variable P and an integer type variable C beforehand and initializes the variables P and C (step S51). When one of the broadcast program 12 is broadcast from the repetition type program broadcasting equipment 11, the integrity inspector 13 receives the broadcast program12 (step S52).

The integrity inspector 13 continues to receive the broadcast programs 12, for example, the broadcast program A, broadcast from the repetition type program broadcasting equipment 11, and when the starting position tag in the broadcast program A is detected (Yes at step S53), the integrity inspector 13 stores the length information in the integer type variable C (step S54). In this, the length information signifies the amount of information of the main contents of the broadcast program A, described by the XML. The main contents provide the time information, the place information, the type information, the program ID, and the program contents.

Next, the integrity inspector 13 continues to store the main contents of the broadcast program A described by the XML in the sequential array type variable P, and at the same time continues to delete the length information of the broadcast program A stored in the integer type variable C (step S55).

The integrity inspector 13 always detects whether or not the integer type variable C is "0". In case the integer type variable C is not "0" (No at step S56), the integrity inspector 13 always detects whether or not the ending position tag of the broadcast program A exists, or whether or not the starting position tag of another broadcast program, for example, the broadcast program B, exists. In case neither one of the tags is detected (No at step S57), the operation returns to step S55, and the broadcast program A is continued to receive. In case one of the tags is detected (Yes at step S57), that is, the broadcast program A could not be received completely caused by some difficulty in reception, and a part of the broadcast program A being from the starting position to right before the ending position tag being to be is discarded (step S58), and the operation returns to step S51, and the integrity inspector 13 prepares to receive the next broadcast program.

In case the integer type variable C is "0" (Yes at step S56), the integrity inspector 13 detects whether or not the ending position tag of the broadcast program A exists at the position. When the ending position tag does not exist (No at step S59), the operation returns to step S58 and a part of the broadcast program A from the starting position to the part received until the time is discarded, because the broadcast program A could not be received completely. When the ending position tag exists at the position (Yes at step S59), the broadcast program 12 (the broadcast program A) stored in the sequential array type variable P is outputted to the program adder 17 (step S60).

Next, after the operation mentioned above, as shown in Fig. 4, the program adder 17 receives the broadcast program A which is outputted from the integrity inspector 13 that judged that the broadcast program A was received completely. And the program adder 17 compares the program ID of the received broadcast program A with the program IDs of broadcast programs stored in the broadcast program storage 18. If the same broadcast program has already been stored in the broadcast program storage 18, the received broadcast program A is discarded. If not, the time information, the place information, and the type information in the broadcast program A are compared with the information in the desired information storage 14, the time storage 15, and the place storage 16. When the results of comparison match, the broadcast program A is stored in a storing unit having a flag "empty" in the broadcast program storage 18, and the flag "empty" is made to be "full", when the results of comparison do not match, and the received broadcast program A is discarded.

The broadcast program storage 18 stores each of the plural broadcast programs in a state that each of the broadcast programs has the time, place, type information, the program ID, the program contents, and the playback times of each of the broadcast programs. In addition to the information mentioned above, the flag being "full" or "empty" showing whether or not each of the stored broadcast programs is effective is stored for each of the stored broadcast programs. When the flag is "full", the information is effective, and when the flag is "empty", the information is ineffective.

Next, the program selector 19 selects one of the broadcast programs 12 stored in the broadcast program storage 18, being the least playback times, outputs the program ID of the selected broadcast program to the program playback unit 20, and makes the broadcast times increase by one.

The program playback unit 20 takes out the broadcast program having the program ID outputted from the program selector 19 from the broadcast program storage 18 and plays back the broadcast program. The taken out broadcast program is, for example, a voice file (wav) and an MPEG file, and the program playback unit 20 has a playing back function corresponding to these formats.

The program deleting unit 21 periodically deletes a broadcast program, just like the operation the program adder 17 adds a new broadcast program to the broadcast program storage 18, for example, every three minutes. The program deleting unit 21 takes out the broadcast programs stored in the broadcast program storage 18 one by one. The program deleting unit 21 compares the time information, the place information, and the type information of the taken out broadcast program with the information in the desired information storage 14, the time storage 15, and the place storage 16. When the results of comparison match, the taken out broadcast program stays in the broadcast program storage 18 as it is. When the compared results are not matched, the taken out broadcast program is deleted, and the flag is made to be "empty" from "full".

Next, a method of the embodiment of the digital broadcast transmitter and receiver for car users of the present invention is explained. First, plural broadcast programs 12 having individual program IDs respectively are broadcast repeatedly. They are stored in the broadcast program storage 18. One of the broadcast programs 12 stored in the broadcast program storage 18, having the least playback times, is selected, and the selected broadcast program is played back.

At the integrity inspector 13, a first broadcast program is continued to be received, and when the starting position tag of the first broadcast program is detected, the length information following the starting position tag is memorized, the main contents of the first broadcast program is memorized, and it is inspected whether or not the ending position tag exists after the main contents. When the ending position tag exists, it is judged that the first broadcast program is received completely, and the first broadcast program is outputted as a broadcast program. When the starting position tag of a second broadcast program is detected before the ending position tag of the first broadcast program is detected, it is judged that the first broadcast program is not received completely, and a part of the first broadcast program from the starting position tag of the first broadcast program until the part right before the starting position tag of the second broadcast program is discarded. When the ending position tag of the first broadcast program does not exist at the end of the main contents of the first broadcast program, it is judged that the first broadcast program is not received completely, and a part of the first broadcast program from the starting position tag of the first broadcast program until right before the ending position tag of the first broadcast program will be discarded.

The individual program IDs in the broadcast programs stored in the broadcast program storage 18 are compared with the program ID of a received broadcast program. When the compared program IDs are the same, the received broadcast program is discarded. When the compared program IDs are not the same, the time information, the place information, and the type information of the received broadcast program are compared with the information in the desired information storage 14, the time storage 15, and the place storage 16. In case the results of comparison match, the received broadcast program is stored in a storing unit having a flag "empty" in the broadcast program storage 18, and the flag "empty" is made to be "full". In case the comparison result does not match, the received broadcast program is discarded.

The broadcast programs in the broadcast program storage 18 are taken out one by one, and the time information, the place information, and the type information of the taken out broadcast program are compared with the information in the desired information storage 14, the time storage 15, and the place storage 16. When the comparison results match, the taken out broadcast program stays in the broadcast program storage 18 as it is. When the comparison results do not match, the taken out broadcast program is deleted.

As mentioned above, according to the present invention, a user can obtain desired information stably, because plural broadcast programs received at the receiver side are stored, and each of the plural broadcast programs is played back equally and repeatedly.

Moreover, the user can always obtain the desired information, because even when a broadcasting station meets some difficulty, the receiver side has already stored the plural broadcast programs received form the broadcasting station and can play back the stored broadcast programs.

Furthermore, the storage, in which the plural broadcast programs are stored, in the receiver side, can be used effectively, because broadcast programs received incompletely are discarded immediately.

While the present invention has been described with reference to the particular illustrative embodiment, it is not to be restricted by that embodiment but only by the appended claims. It is to be appreciated that those skilled in the art can change or modify the embodiment without departing from the scope and spirit of the present invention.

## Claims

1. A digital broadcast transmitter and receiver for car users, comprising:
repetition type program broadcasting equipment which repeatedly broadcasts plural broadcast programs having respective individual program IDs (identifiers) one by one;
broadcast program storage which stores said plural broadcast programs broadcast from said repetition type program broadcasting equipment:
a program selector which selects a broadcast program having the least playback times from said plural broadcast programs stored in said broadcast program storage; and
a program playback unit which plays back said broadcast program selected at said program selector.

2. A digital broadcast transmitter and receiver for car users in accordance with claim 1, further comprising:
an integrity inspector which continues to receive a first broadcast program broadcast from said repetition type program broadcasting equipment, and
when a starting position tag of said first broadcast program is detected, memorizes length information, following said starting position tag, being the amount of information of main contents of said first broadcast program, and said main contents of said first broadcast program, and
inspects whether or not an ending position tag of said first broadcast program exists after said main contents, and
in case said ending position tag exists, judges that said first broadcast program has been received completely, and outputs said first broadcast program as a received broadcast program, and
in case a starting position tag of a second broadcast program is detected before said ending position tag of said first broadcast program is detected, judges that said first broadcast program has not been received completely, and discards a part of said first broadcast program from said starting position tag of said first broadcast program to right before said starting position tag of said second broadcast program, and
in case said ending position tag of said first broadcast program does not exist after said main contents of said first broadcast program, judges that said first broadcast program has not been received completely, and discards a part of said first broadcast program from said starting position tag of said first broadcast program to right before the position where said ending position tag of said first broadcast program is to exist, and
continues to receive said broadcast programs from said repetition type program broadcasting equipment after the reception of said first and second broadcast programs one by one.

3. A digital broadcast transmitter and receiver for car users in accordance with claim 1, further comprising:
desired information storage in which type information a user desires to obtain is stored;
time storage in which present time information read out from a clock is automatically stored;
place storage in which present place information read out from a GPS (global positioning system) is stored in the form of latitude and longitude; and
a program adder which said broadcast program outputted from said integrity inspector is inputted to, and compares said program ID of said inputted broadcast program with said program IDs of said broadcast programs stored in said broadcast program storage, and
in case the result of comparison is the same, said inputted broadcast program is discarded, and
in case the comparison result is not the same, time information, place information, and type information of said inputted broadcast program are compared with said information in said desired information storage, said time storage, and said place storage, and when the comparison result matches, said inputted broadcast program is stored in a storage unit having a flag "empty" in said broadcast program storage, and makes said flag "empty" "full", and
when said comparison result does not match, discards said inputted broadcast program.

4. A digital broadcast transmitter and receiver for car users in accordance with claim 1, further comprising:
a program deleting unit which takes out said broadcast programs stored in said broadcast program storage one by one, and the time information, the place information, and the type information of said taken out broadcast program are compared with the information in said desired information storage, said time storage, and said place storage, and
in case the comparison result matches, said taken out broadcast program is left in said broadcast program storage, and
in case the comparison result does not match, said taken out broadcast program is discarded from said broadcast program storage.

5. A digital broadcast transmitter and receiver for car users in accordance with claim 1, wherein:
each of said plural broadcast programs provides a starting position tag, length information, main contents, and an ending position tag, and
said main contents provides time information, place information, type information, said program ID, and program contents, and
said broadcast program storage provides storage areas of a program storage unit having a flag "full" or "empty", the number of playback times, and storage areas for said main contents being said time information, said place information, said type information, said program ID, and said program contents.

6. A digital broadcast transmitter and receiver for car users comprising:
repetition type program broadcasting equipment which repeatedly broadcasts plural broadcast programs having respective individual program IDs one by one;
an integrity inspector which continues to receive said plural broadcast programs broadcast from said repetition type program broadcasting equipment one by one, and
when a starting position tag of a first broadcast program is detected, memorizes length information, following said starting position tag, being the amount of information of main contents of said first broadcast program, and said main contents of said first broadcast program, and
inspects whether or not an ending position tag of said first broadcast program exists after said main contents, and
in case said ending position tag exists, judges that said first broadcast program has not been received completely, and outputs said first broadcast program as a received broadcast program, and
in case a starting position tag of a second broadcast program is detected before said ending position tag of said first broadcast program is detected, judges that said first broadcast program has not been received completely, and discards a part of said first broadcast program from said starting position tag of said first broadcast program to right before said starting position tag of said second broadcast program, and
in case said ending position tag of said first broadcast program does not exist after said main contents of said first broadcast program, judges that said first broadcast program has not been received completely, and discards a part of said first broadcast program from said starting position tag of said first broadcast program to right before the position where said ending position tag of said first broadcast program is to exist, and
continues to receive said plural broadcast programs from said repetition type program broadcasting equipment after the reception of said first and second broadcast programs one by one;
broadcast program storage which stores plural broadcast programs passed through said integrity inspector and a program adder;
a program selector which selects a broadcast program having the least playback times from said plural broadcast programs stored in said broadcast program storage;
a program playback unit which plays back said broadcast program selected at said program selector,
desired information storage in which type information a user desires to obtain is stored;
time storage in which present time information read out from a clock is automatically stored;
place storage in which present place information read out from a GPS is stored in the form of latitude and longitude;
said program adder which said broadcast program outputted from said integrity inspector is inputted to, and compares said program ID of said inputted broadcast program with said program IDs of said broadcast programs stored in said broadcast program storage, and
in case the result of comparison is the same, said inputted broadcast program is discarded, and
in case the comparison result is not the same, time information, place information, and type information of said inputted broadcast program are compared with said information in said desired information storage, said time storage, and said place storage, and when the comparison results match with each other, said inputted broadcast program is stored in a storage unit having a flag "empty" in said broadcast program storage, and makes said flag "empty" "full", and
when said comparison result does not match, discards said inputted broadcast program; and
a program deleting unit which takes out said broadcast programs stored in said broadcast program storage one by one, and the time information, the place information, and the type information of said taken out-broadcast program are compared with the information in said desired information storage, said time storage, and said place storage, and
in case the comparison result matches, said taken out broadcast program is left in said broadcast program storage, and
in case the comparison result does not match, said taken out broadcast program is discarded from said broadcast program storage.

7. A digital broadcast transmitting and receiving method for car users, comprising the steps of:
broadcasting repeatedly plural broadcast programs having respective individual program IDs one by one;
storing said plural broadcast programs in broadcast program storage;
selecting a broadcast program having the least playback times from said plural broadcast programs stored in said broadcast program storage; and
playing back said selected broadcast program.

8. A digital broadcast transmitting and receiving method for car users in accordance with claim 7, further comprising the steps of:
continuing to receive a first broadcast program;
when a starting position tag of said first broadcast program is detected, memorizing length information being the amount of information of main contents of said first broadcast program following said starting position tag, and said main contents of said first broadcast program;
inspecting whether or not an ending position tag of said first broadcast program exists after said main contents,
in case said ending position tag exists, outputting said first broadcast program as a received broadcast program by judging that said first broadcast program has been received completely;
in case a starting position tag of a second broadcast program is detected before said ending position tag of said first broadcast program is detected, discarding a part of said first broadcast program from said starting position tag of said first broadcast program to right before said starting position tag of said second broadcast program by judging that said first broadcast program has not been received completely;
in case said ending position tag of said first broadcast program does not exist after said main contents of said first broadcast program, discarding a part of said first broadcast program from said starting position tag of said first broadcast program to right before the position where said ending position tag of said first broadcast program is to exist by judging that said first broadcast program has not been received completely; and
continuing to receive said plural broadcast programs after the repetition of said first and second broadcast programs.

9. A digital broadcast transmitting and receiving method for car users in accordance with claim 7, further comprising the steps of:
storing type information which a user desires to obtain;
storing automatically present time information read out from a clock;
storing present place information read out from a GPS in the form of latitude and longitude;
inputting said completely received broadcast program;
comparing said program ID of said inputted broadcast program with said program IDs of said broadcast programs stored in said broadcast program storage;
in case the result of comparison is the same, discarding said inputted broadcast program:
in case the comparison result is not the same, comparing time information, place information, and type information of said inputted broadcast program with said information of said type information which said user desired to obtain, said present time information, and said present place information, and when the comparison result matches, storing said inputted broadcast program in a storage unit having a flag "empty" in said broadcast program storage, and making said flag "empty" "full", and
when said comparison result does not match, discarding said inputted broadcast program.

10. A digital broadcast transmitting and receiving method for car users in accordance with claim 7, further comprising the steps of:
taking out said broadcast programs stored in said broadcast program storage one by one;
comparing the time information, the place information, and the type information of said taken out broadcast program with the information of said stored type information which said user desires to obtain, said stored time information, and said stored place information;
in case the comparison result matches, making said taken out broadcast program stay in said broadcast program storage; and
in case the comparison result does not match, making said taken out broadcast program discard from said broadcast program storage.

11. A digital broadcast transmitting and receiving method for car users, comprising the steps of:
broadcasting plural broadcast programs having respective individual program IDs one by one;
continuing to receive said plural broadcast programs one by one, and
when a starting position tag of a first broadcast program is detected, memorizing length information, following said starting position tag, being the amount of information of main contents of said first broadcast program, and said main contents of said first broadcast program, and
inspecting whether or not an ending position tag of said first broadcast program exists after said main contents, and
in case said ending position tag exists, judging that said first broadcast program has been received completely, and outputting said first broadcast program as a received broadcast program, and
in case a starting position tag of a second broadcast program is detected before said ending position tag of said first broadcast program is detected, judging that said first broadcast program has not been received completely, and discarding a part of said first broadcast program from said starting position tag of said first broadcast program to right before said starting position tag of said second broadcast program, and
in case said ending position tag of said first broadcast program does not exist after said main contents of said first broadcast program, judging that said first broadcast program has not been received completely, and discarding a part of said first broadcast program from said starting position tag of said first broadcast program to right before the position where said ending position tag of said first broadcast program is to exist, and
continuing to receive said plural broadcast programs after the reception of said first and second broadcast programs one by one;
storing said completely received plural broadcast programs in said broadcast program storage;
selecting a broadcast program having the least playback times from said plural broadcast programs stored in said broadcast program storage;
playing back said selected broadcast program;
storing type information that a user desires to obtain;
storing present time information read out from a clock automatically;
storing present place information read out from a GPS in the form of latitude and longitude;
inputting said completely received broadcast program;
comparing said program ID of said inputted broadcast program with said program IDs of said broadcast programs stored in said broadcast program storage, and
in case the comparison result is the same. said inputted broadcast program is discarded, and
in case the comparison result is not the same, time information, place information, and type information of said inputted broadcast program are compared with said information of said stored type information that said user desires to obtain, said stored present time information, and said stored present place information, and when the result of comparison matches, storing said inputted broadcast program in a storage unit having a flag "empty" in said broadcast program storage, and making said flag "empty" "full", and
when said comparison result does not match, discarding said inputted broadcast program;
taking out said broadcast programs stored in said broadcast program storage one by one;
comparing the time information, the place information, and the type information of said taken out broadcast program with said information of said stored type information that said user desires to obtain, said stored present time information, and said stored present place information, and
in case the comparison result matches, said taken out broadcast program is left in said broadcast program storage, and
in case the comparison result does not match, said taken out broadcast program is discarded from said broadcast program storage.
